# EUROPEAN PATENT SPECIFICATION

(11) **EP 1 136 627 B1**
(45) Date of publication and mention of the grant of the patent: **30.09.2009**
(21) Application number: 00946270.6
(22) Date of filing: 12.07.2000
(51) Int. Cl.: E02F 7/00, E02D 3/12, C09K 17/10

(54) **LIME-IMPROVED SOIL MORTAR AND METHOD FOR PRODUCTION THEREOF AND FLUIDIZATION TREATMENT METHOD USING THE SAME**
MITTELS KALK VERBESSERTER GRUNDMÖRTEL, VERFAHREN ZUR HERSTELLUNG DESSELBEN UND VERFLÜSSIGUNGSMETHODE MITHILFE DESSELBEN
MORTIER DE TERRE AMELIOREE PAR DE LA CHAUX, PROCEDE DE PRODUCTION ET DE FLUIDIFICATION DE CELUI-CI

(30) Priority: 12.07.1999 JP 19721699
(43) Date of publication of application: 26.09.2001
(73) Proprietor: Okutama Kogyo Co., Ltd., Shibuya-ku, Tokyo 151-0051 (JP)
(72) Inventor: SATOH, Syunji, Fussa-shi, Tokyo 197-0012 (JP); KOJIMA, Toshiji, Ome-shi, Tokyo 198-0015 (JP)
(74) Representative: Henkel, Feiler & Hänzel
(86) International application number: PCT/JP2000/004649
(87) International publication number: WO 2001/004426

(56) References cited:
- JP-A- 8 020 776
- JP-A- 2000 256 669
- US-A- 4 871 283

## Description

### Technical Field

The invention relates to a fluidized soil, a manufacturing method thereof, and a fluidizing process to be utilized for an execution of filling, back-filling, grouting, embankment work in a civil engineering/construction work.

### Background Art

For the execution of filling, back-filling, grouting and embankment in a civil engineering/construction work, it is the conventional practice to use such soil generated at the work site as excavated surplus soil. And, where the generated soil is defective, either to use the good-quality soil in place thereof, or to use the soil improved by proportioning such generated surplus soil with a solidifying material is generally well known.

This conventional practice requires compaction and tamping. And, it is necessary to control the pressure from a compactor, temper and the like to an extent not causing a breakage of the buried pipe.
For example, where the execution of back-filling work after installing or repairing such buried pipes as a sewer pipe, a gas pipe or a duct type underground pipeline for a communication cable are required, this control is inevitable.

Under these circumstances, it may become difficult to achieve sufficient compaction or tamping of the soil around the buried pipe, or an insufficiency of filling work tends to produce remaining cavities, then, this may poses problems such as land settlement or sagging. In such a trouble, an excessive stress tends to occur in the buried pipe, and lead to breakage. The same will occur in the case of back-filling of a retaining wall or an abutment.

On the other hand, to solve these problems, various kinds of fluidizing processes are introduced. Among them, the liquefaction process is applied for a civil construction work, by using fluidized soil, prepared by imparting flow-ability and applying a treatment for improving filling property, to soil generated at a construction work site. As conventional process examples on fluidized soil, Japanese Unexamined Patent Application Publication of the followings are disclosed.

Japanese Unexamined Patent Application Publication No. 63-233115 discloses, "Fluidized soil obtained by mixing and stirring soil (sand and earth) with water and a solidifying material by reciprocating/rotation stirring" (Referred to as the "prior art 1", hereafter).

Japanese Unexamined Patent Application Publication No. 1-312118 discloses, "Fluidized soil proportioned by mixing excavated soil with a hydraulic solidifying material and water" (Referred to as the "prior art 2", hereafter).

Japanese Unexamined Patent Application Publication No. 6-344328 discloses, "Immediate effect fluidized soil comprising of slurry obtained by mixing soil (sand and earth) and water, and a mixture with a solidifying material" (Referred to as the "prior art 3", hereafter).

Japanese Unexamined Patent Application Publication No. 7-82984 discloses, "Fluidized soil prepared by required conditioned slurry, which is obtained by mixing a raw material soil with slurry containing clay, silt and fine grade soil of the order of bentonite, and adding a solidifying material thereto" (Referred to as the "prior art 4", hereafter).

Japanese Patent Application No 8-20776 (abstracts) discloses a mix of soil with a conditioner. This conditioner is either a mix of setting accelerator (waterglass), water absorbing polymer, quicklime and hydraulic binder, whereas the ingredients are added one by one in the given order. Or this conditioner is a mixture of the following two premixes, namely premix I of setting accelerator (waterglass) and water absorbing polymer and, namely premix II of quicklime and hydraulic binder.

According to the aforementioned prior art it is described that the fluidizing processes using the fluidized soil are effective for clarifying the problems to be solved by the respective inventions.

In any of the aforementioned prior art, however, for the purpose of the preparation of fluidized soil, either water and solidifying material are simultaneously mixed into soil such as improved soil, or soil and water are mixed in advance and then the solidifying material is mixed therein. Thus, when soil and water are mixed as described above, true particles (or grains) of soil are released and dispersed from the surfaces of quasi-grain-shaped soil particles, which is granulated preliminarily into an appropriate grain size, during fluidizing treatment, and this leads to a higher viscosity of the fluidized soil. As a result, a viscosity increases to over the viscosity value suitable for actual use of the fluidized soil in a construction site. It is therefore necessary to increase the amount of mixed water to inhibit increase in viscosity. Because an increase in the amount of water leads to a decrease in strength, the amount of cement must be increased, which corresponds to the reduction of the amount of soil to be mixed.

In the prior arts, furthermore, a longer mixing period is required for ensuring full display of the functions of the solidifying material by eliminating the coagulated portion upon mixing of soil, water and the solidifying material. This means where much time is required for mixing and preparing fluidized soil, the productivity in such narrow space of a construction site is limited. It is, therefore, at a construction site, difficult to prepare and utilize fluidized soil. In view of these circumstances, the present inventors adopted, as objects of the present invention, inhibition of an increase in viscosity caused by mixing operation, by preventing true soil particles from separating from the surfaces of soil preliminarily quasi-granulated into an appropriate grain size and from dispersing into the fluidized soil (mortar), during the mixing step of water, the solidifying material and soil, and resultant promotion of dispersion of the solidifying material during the mixing step of soil, water and the solidifying material.

The present invention has therefore an object to provide a manufacturing method of lime-improved soil mortar and a method for utilization thereof, which permits reduction of the construction period by reducing the period required for preparing fluidized soil used in a civil engineering/construction work, and increase in reuse rate of soil generated from the construction work, thus reducing the cost of disposal of generated soil, and furthermore, contributing to the environmental improvement.

### Disclosure of Invention

From the view point as described above, the present inventors carried out extensive studies to develop a manufacturing method and a fluidizing process, of fluidized soil in a civil engineering/construction work. As a result, they obtained the following findings.
It is possible to inhibit increase in viscosity of the fluidized soil caused by separation and dispersion of true soil particles from the surfaces of soil grains quasi-granulated upon mixing, and to accomplish dispersion of the coagulated portion of the hydraulic solidifying material, by adopting a method of mixing water preliminarily with a hydraulic solidifying material such as cement, which require a considerable stirring force upon mixing with water, and mixing the resultant hydraulic solidifying material slurry with soil.

The present invention was developed on the basis of the aforementioned findings, of which the gist is as follows. The lime-improved soil mortar of the first aspect of the invention, used for the fluidizing process in a civil engineering/construction work, characterized in that it is manufactured by the following first and second steps:
a first step: preparing slurry by mixing water and a hydraulic solidifying material; and
a second step: mixing and stirring the slurry prepared in the first step and the lime-improved soil to manufacture lime-improved soil mortar.

According to the second aspect of the invention, the manufacturing method of lime-improved soil mortar used in the fluidizing process in the civil engineering/construction work comprising the following two steps:
a first step: preparing slurry by mixing water and a hydraulic solidifying material; and
a second step: mixing and stirring the slurry prepared in the first step and the lime-improved soil to manufacture lime-improved soil mortar.

The fluidizing process according to the third aspect of the invention comprises, in a civil engineering/construction work for executing backfilling, backing, grouting and construction of a banking structure by using fluidized lime-improved soil, the steps of preparing lime-improved soil mortar by the method according to the second aspect of the invention as the fluidized lime-improved soil, and executing the work by using the thus prepared lime-improved soil mortar.

In the fluidizing process according to the fourth aspect of the invention, the lime-improved soil mortar is prepared at the site of the civil engineering/construction work.

In the fluidizing process according to the fifth aspect of the invention, the mixing ratio of the slurry to the lime-improved soil in the second step is determined on the basis of a viscosity value required for the lime-improved soil mortar used at the execution site. As the viscosity value, it is desirable to use, for example, a flow value.

### Brief Description of the Drawing

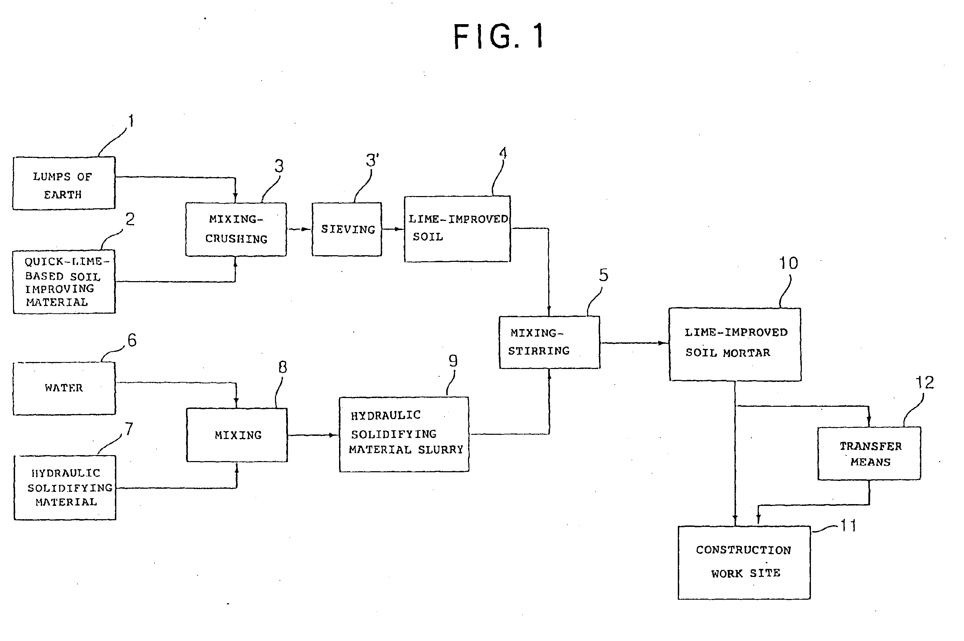

Fig. 1 is a flowchart showing the preparing steps of the lime-improved soil mortar of the present invention through the use thereof.

### Best Mode for Carrying Out the Invention

The best mode for carrying out the present invention will now be described with reference to the drawings.

Fig. 1 is a flowchart showing the preparing step of the lime-improved soil mortar of the invention through the use thereof.

As soil material for preparing lime-improved soil mortar 10 of the invention, lime-improved soil 4 is the most suitable. Improved soil is prepared, by mixing such lumps of earth 1 such as generated from/at a construction site 11, with a soil improving material, and mixing, crushing and sieving the resultant mixture. As a soil improving material, quick lime or quick lime-based soil improving material 2 is suitable, and lime-improved soil 4 is prepared by the use thereof. On the other hand, hydraulic solidifying slurry 9 is prepared by mixing water 6 and a hydraulic solidifying material 7. Then, by mixing and stirring the hydraulic solidifying slurry 9 and the above mentioned lime-improved soil 4, lime-improved soil mortar 10, which is fluidized soil, is prepared.

In the step described above, no particular limitation is required on the kind of lumps and origin of earth (raw material soil) used for preparing the lime-improved soil 4. For example, not only such kinds of soil as silty soil, cohesive soil, sandy cohesive soil, gravel-based cohesive soil, volcanic ashes cohesive soil, sandy soil and gravel, but also soil generated from construction, and sand and earth of good-quality are applicable. No particular limitation is imposed on the constituent ratios of the component soil raw materials of the lumps of earth 1. It is desirable to use the largest possible portion of surplus soil generated in a construction site for back-filling (to be reused). In other words, achieving the highest possible utilization ratio of soil generated from construction is advantageous in saving the construction cost, and is desirable also for environmental preservation.
In order to favorably carry out the fluidization process using the lime-improved soil mortar of the invention, from such a point of view, the mixing ratio of lime-improved soil in the lime-improved soil mortar should preferably be at least 50 vol.%. Use of a ratio of at least 50 vol.% of lime-improved soil in the lime-improved soil mortar poses no problem: Physical property value (flow value, unconfined compressive strength) of the lime-improved soil mortar are stable, and there is available excellent level and balance between them, thus permitting stable application of the fluidizing process using the lime-improved soil mortar 10 of the invention.

As the soil improving material 2, it is desirable to use a quick lime soil improving material. And it may also be applicable to use quick lime itself, or a material mainly comprising quick lime, further mixed with cement, or gypsum or slag as an auxiliary material. The mixing ratio of the auxiliary material should be under 50 wt.%, or preferably, up to 40 wt.%, because an excessively high mixing ratio of the auxiliary material prevents sufficient display of the soil improving effect.

The quick lime-based soil improving material 2 is used as a soil improving material because it ensures smooth crushing of the limps of earth 1. When quick lime (CaO) is mixed with the lumps of earth 1, CaO is considered to absorb moisture in the lumps of earth, that is a slaking reaction, and the reaction product thereof is considered to lead to ion exchange and other effects in the soil.

For the mixing ratio of the above mentioned quick lime-based soil improving material 2 and the lumps of earth 1, an appropriate value should be selected on response to the kind of lumps of earth and the kind of construction work to be covered.
According to an experiment carried out by the present inventors, the mixing ratio of the quick lime-based soil improving material 2 should be within a range from 10 to 300 kg relative to 1 m³ of the lumps of earth. Or this ratio should be preferably from 20 to 200 kg, even upon a change in the kind of the lumps of earth 1. With a mixing ratio of the quick lime-based soil improving material 2 of under 10 kg/m³, the above mentioned effects of the quick lime-based soil improving material 2 cannot be fully displayed. With a ratio of over 300 kg/m³, on the other hand, an increase in the effect corresponding to this increment is not observed, resulting in a disadvantage in cost.

Since the quick lime-based soil improving material 2 has the effects as described above, mixing thereof with the lumps of earth 1 accelerates crushing of the lumps of earth. When conducting the mixing treatment described above, therefore, it is desirable to use a mixing/crushing machine permitting mixing and crushing of the lumps of earth 1 and the quick lime-based soil improving material 2 in a single casing. It suffices to use a drum mixer, a single-shaft or a dual-shaft paddle mixer, a ribbon mixer, a double roll crusher, and impact crusher singly or in an appropriate combination thereof. This is applicable to the use of defective surplus soil such as construction surplus soil containing concrete debris, asphalt debris, and gravel, washed crushed stone cakes, shield mud and moraine of a dam.

The thus completed lime-improved soil 4 takes the form of finely crushed lumps of earth 1 in a uniformly mixed state having an almost uniform grain size. The grain size distribution of this lime-improved soil 4 can be made more uniform by applying a classifying treatment such as sieving.

The most important feature of the present invention is that the lime-improved soil mortar 10 is obtained through steps of previously mixing the hydraulic solidifying material 7 with water 6, and mixing the resultant hydraulic solidifying material slurry 9 with soil, or preferably, with the lime-improved soil 4. It is therefore possible to maintain an appropriate grain size of the thus prepared lime-improved soil 4, and inhibit an increase in viscosity of the lime-improved soil mortar 10.

As the hydraulic solidifying material 7, for example, cement such as Portland cement, blast furnace slag cement, or flyash cement, a cement-based solidifying material, or blast furnace slag fine powder is used.

The material mixing ratio for preparing the lime-improved soil mortar 10 of the invention must satisfy the condition of permitting transfer of the lime-improved soil mortar 10 in a stable state to the construction site by means of a pump truck for transferring the lime-improved soil mortar to the construction site, or a combination equipment of a pump truck and a transporting pipe, and flow-ability for this purpose should be provided. This material mixing ratio is determined in response to the strength required for the object structure of work, and flow-ability required for the lime-improved soil mortar under the construction conditions.

When a sufficient space cannot be provided in the construction site, the lime-improved soil mortar 10 is prepared at a separate place, and transported to the construction site by means of, for example, a truck mixer, or a combination equipment of a pump and a transfer pipe. Executing operations such as filling, back-filling, grouting, or construction of an embankment are performed by the fluidizing process using the thus obtained lime improved soil mortar 10.

When using the lime-improved soil mortar 10, it is important to ensure a high flow-ability of the lime-improved soil mortar 10 during the use, to improve efficiency and stabilization of the construction operation. For this purpose, the flow value (Fa) is previously set as an appropriate viscosity value of the lime-improved soil mortar 10 upon use for each of work, and an extent of stirring in the transfer step of the lime-improved soil mortar 10 after preparation is predicted. The decrease in the flow value is thus previously determined in response to the predicted amount of stirring. A target flow value (Fo) upon preparation of the lime-improved soil mortar 10 is determined so as to give a flow value (Fa + Δ F) obtained by adding the thus previously determined decrease Δ F) in the flow value to the above mentioned appropriate flow value (Fa). Values of F, varying with the distance of transfer or the manner of transfer to the work site from the place of preparation of the lime-improved soil mortar 10, should preferably be determined in advance through experiments.

As a result of study on the material-mixing ratio of the lime-improved soil material 10 from the above mentioned point of view, the present inventors obtained the following conclusions.

It is necessary to use water 6 and the hydraulic solidifying material 7 in appropriate amounts in response to the strength required for the object of execution and the flow-ability under the execution conditions: Water 6 should preferably be in an amount within a range of from 100 to 500 kg, and the hydraulic solidifying material, within a range of from 30 to 500 kg, per m³ of the finished lime-improved soil mortar. A gas foaming agent, a dispersing or a fluidizing agent usually added to fluidized soil used for filling, back-filling, and construction of embankment may be added to the lime-improved soil mortar 10.

When the thus prepared lime-improved soil mortar 10 is transferred to the construction site 11 by means of transfer means 12 equipped with a pump such as a truck mixer and placing the transferred lime-improved soil mortar 10 by chute casting, the extent of stirring of the lime-improved soil mortar 10 during transportation is smaller than that in chute casting after pipeline transfer. This means that the amount of decrease in flow-ability (decrease in the flow value) of the lime-improved soil mortar 10 during transfer is smaller. The ratio of water for mixing and stirring in the lime-improved soil mortar 10 can therefore be low. It is therefore possible to increase so much the mixing ratio of the lime-improved soil 4, thus permitting increase in the use ratio of the lumps of earth 1 and hence increase in the utilization ratio of soil generated from construction work. Work accomplished by chute casting include vertical and/or steep-angle filling in road widening and site preparing works, filling at tunnel entry, and various underwater fills to which compaction is not applicable.

In the present invention, as described above, only a short period of time is required for mixing and stirring the lime-improved soil 4 and the hydraulic solidifying material slurry. For a certain object of construction or a certain area of the work site, therefore, it may be possible to prepare the lime-improved soil mortar 10 at the construction work site. In this case, therefore, the necessity to take account of an increment of viscosity during the transfer process of the lime-improved soil mortar 10 is eliminated. Thus making it possible to further reduce the ratio of water for mixing and stirring in the lime-improved soil mortar 10, and thus to further increase the utilization ratio of soil generated from construction work. Reduction of the time for mixing and stirring as described above further improves the construction efficiency.

The present invention will now be described further by means of examples.

Nine samples of the lime-improved soil mortar of the invention (Examples 1 to 9) were prepared in the following manners. Lime-improved soil was prepared by adding 25 wt.% quick lime to volcanic ashes cohesive soil having a water content of 140 wt.%, and mixing and crushing the mixture. On the other hand, the method of mixing and stirring the lime-improved soil with a hydraulic solidifying material and water comprised the steps of preparing a separate blast furnace slag cement slurry by mixing blast furnace slag cement and water, and preparing the lime-improved soil mortar by mixing and stirring this slurry with the lime-improved soil. The material mixing ratio of the lime-improved soil mortar was common to Examples 1 to 9 per m³ of the finished lime-improved soil mortar. Three levels of the mixing-stirring period of the lime-improved soil and the blast furnace slag cement were set, and three repeated samples of lime-improved soil mortar were prepared for each level. Table 1 shows the preparing conditions of the lime-improved soil mortar samples of Examples 1 to 9.

**Table 1**

| | LIME-IMPROVED SOIL(A) (kg/m³)* | SLURRY(B) (kg/m³) | | MIXING-STIRRRING TIME OF A+B (sec) |
|---|---|---|---|---|
| | | BREAKDOWN | | |
| | | BF CEMENT | WATER | |
| EXAMPLE1 | 780 | 200 | 360 | 30 |
| EXAMPLE2 | 780 | 200 | 360 | 30 |
| EXAMPLE3 | 780 | 200 | 360 | 30 |
| EXAMPLE4 | 780 | 200 | 360 | 60 |
| EXAMPLE5 | 780 | 200 | 360 | 60 |
| EXAMPLE6 | 780 | 200 | 360 | 60 |
| EXAMPLE7 | 780 | 200 | 360 | 120 |
| EXAMPLE8 | 780 | 200 | 360 | 120 |
| EXAMPLE9 | 780 | 200 | 360 | 120 |

| | | | | |
|---|---|---|---|---|
| NOTE *) Vol. mixing ratio of lime-improved soil is 58 vol. %. | | | | |

Nine samples of lime-improved soil mortar for comparative test were prepared in contrast in the following manners (Comparative Examples 1 to 9). Lime-improved soil was prepared by adding 25 wt.% quick lime to volcanic ashes cohesive soil having a water content of 140 wt.%, and mixing and crushing the mixture. However, unlike the Examples, the method of mixing and stirring the lime-improved soil with a hydraulic solidifying material and water comprised the step of directly mixing and stirring the lime-improved soil, the blast furnace slag cement and water to prepare lime-improved soil mortar, in the Comparative Examples. Provided however that the mixing-stirring time of the lime-improved soil and the blast furnace slag cement is the same as in Examples, and the material mixing ratio of the lime-improved soil mortar is also the same as in Examples. Table 1 shows the preparing conditions of the lime-improved soil mortar in Examples 1 to 9, and Table 2 shows the preparing conditions of the lime-improved soil mortar in Comparative Examples 1 to 9.

**Table 2**

| | LIME-IMPROVED SOIL(A) (kg/m³)* | BF CEMENT (C) (kg/m³) | WATER (D) (kg/m³) | MIXING-STIRRING TIME OF A+C+D (sec) |
|---|---|---|---|---|
| COMPARATIVE EXAMPLE1 | 780 | 200 | 360 | 30 |
| COMPARATIVE EXAMPLE2 | 780 | 200 | 360 | 30 |
| COMPARATIVE EXAMPLE3 | 780 | 200 | 360 | 30 |
| COMPARATIVE EXAMPLE4 | 780 | 200 | 360 | 60 |
| COMPARATIVE EXAMPLE5 | 780 | 200 | 360 | 60 |
| COMPARATIVE EXAMPLE6 | 780 | 200 | 360 | 60 |
| COMPARATIVE EXAMPLE7 | 780 | 200 | 360 | 120 |
| COMPARATIVE EXAMPLE8 | 780 | 200 | 360 | 120 |
| COMPARATIVE EXAMPLE9 | 780 | 200 | 360 | 120 |

| | | | | |
|---|---|---|---|---|
| NOTE *) Vol. mixing ratio of lime-improved soil is 58 vol. %. | | | | |

As is clear from the preparing conditions of the lime-improved soil mortar shown above, a difference in the preparing conditions of the lime-improved soil mortar between Examples and Comparative Examples is that mixing of the lime-improved soil with the blast furnace slag cement serving as the hydraulic solidifying material and water was carried out, in Examples, in the form of blast furnace slag cement slurry, whereas, in Comparative Examples, blast furnace slag cement and the slurry were separately mixed and stirred.

For each of the lime-improved soil mortar samples obtained in Examples and Comparative Examples, tests of flow value and unconfined compressive strength were carried out. The result is shown in Table 3. The flow value test was conducted on lime-improved soil mortar immediately after preparation in compliance with the flow test set forth in Japan Highway Public Corporation Standard JHS A 313, and the unconfined compressive strength was tested by preparing cylindrical test pieces of lime-improved soil mortar having a diameter of 100 mm and a height of 200 mm, subjecting the thus prepared test pieces to moist-air curing in a thermostatic chamber at 20°C and a humidity of 80% for 28 days, and then to an unconfined compression test in accordance with JIS A 1216 to make measurements.

**Table 3**

| | FLOW-VALUE (mm) | UNIAXIAL COMPRESSIVE STRENGTH (kgf/cm²) |
|---|---|---|
| EXAMPLE 1 | 180 | 9.34 |
| EXAMPLE 2 | 184 | 9.47 |
| EXAMPLE 3 | 186 | 9.12 |
| EXAMPLE 4 | 160 | 10.23 |
| EXAMPLE 5 | 156 | 10.77 |
| EXAMPLE 6 | 160 | 10.55 |
| EXAMPLE 7 | 118 | 10.65 |
| EXAMPLE 8 | 120 | 10.54 |
| EXAMPLE 9 | 116 | 10.88 |
| COMPARATIVE EXAMPLE 1 | 196 | 7.43 |
| COMPARATIVE EXAMPLE 2 | 174 | 7.05 |
| COMPARATIVE EXAMPLE 3 | 189 | 5.59 |
| COMPARATIVE EXAMPLE 4 | 159 | 7.24 |
| COMPARATIVE EXAMPLE 5 | 170 | 8.55 |
| COMPARATIVE EXAMPLE 6 | 166 | 8.12 |
| COMPARATIVE EXAMPLE 7 | 120 | 10.47 |
| COMPARATIVE EXAMPLE 8 | 117 | 10.61 |
| COMPARATIVE EXAMPLE 9 | 122 | 10.70 |

As is clear from the test result shown above, the lime-improved soil mortar samples of Comparative Examples 1 to 3 and 4 to 6 show dispersions of physical property values demonstrating unstable state of the samples although all these samples were fluidized under the same conditions. For the lime-improved soil mortar samples of Comparative Examples 7 to 9, showing stable physical property values, a long mixing-stirring time of 120 seconds were required for stabilization.

For the lime-improved soil mortar samples of Examples 1 to 3, 4 to 6 and 7 to 9 prepared by the method of the invention, in contrast, dispersions are very slight between repeated tests for any of the physical values including the flow value and unconfined compressive strength for those prepared under the same preparing conditions, thus exhibiting a high stability and an excellent balance between different levels of these physical properties. The unconfined compressive strength for Examples 4 to 6 shows excellent values on the same level as the unconfined compressive strength for Comparative Examples 7 to 9, thus permitting considerable reduction of the mixing-stirring time from 120 seconds for Comparative Examples 7 to 9 to 60 seconds.

Examples and Comparative Examples will now be compared as to the flow value of the lime-improved soil mortar samples showing unconfined compressive strength values on the equivalent levels. From such a point of view, the lime-improved soil mortar samples of Examples 4 to 6 show larger flow values than the lime-improved soil mortar samples of Examples 7 to 9. This suggests that the lime-improved soil mortar used must have a large flow value in a fluidizing process for backfilling. It is therefore necessary to add water or the like to achieve a larger flow value for a mortar having a small flow value. This causes a decrease in the reuse rate of soil. This reveals that the reuse rate of soil is improved over the conventional one by using the manufacturing technique of lime-improved soil mortar of the invention.

### Industrial Applicability

According to the present invention, as described above, when lime-improved soil is mixed and stirred with a hydraulic solidifying material and water, release and dispersion of true earth particles from quasi-grain surfaces of the lime-improved soil are inhibited. It is therefore possible, during the mixing-stirring process of soil, to inhibit increase in viscosity of the mixture. As a result, because it is possible to inhibit the water mixing ratio of the fluidized soil which is that mixture to a level lower than in the conventional art, the reuse rate of soil can be increased as compared with the conventional art, thus making it possible to reduce the work cost and contribute to environmental preservation.

For the purpose of ensuring full display of functions by dispersing the coagulated portion of the hydraulic solidifying material, the invention permits considerable reduction of the time required for mixing and stirring of the fluidized soil which so far required a long period of time. As a result, it is possible to prepare fluidized soil at the construction site, thereby improving the work operational efficiency and reducing the work cost.

According to the invention, furthermore, it is possible to provide lime improved soil mortar permitting achievement of the aforementioned objects, a manufacturing method thereof, and fluidizing process using the same, thus providing industrially useful effects.

## Claims

1. Lime-improved soil mortar, used for the liquefaction process in a civil engineering/construction work, **characterized in that** is manufactured by the following first and second steps:
1^{st} step: preparing slurry by mixing water and a hydraulic solidifying material; and
2^{nd} step: mixing and stirring said slurry prepared in said 1 step and said lime-improved soil to manufacture lime-improved soil mortar.

2. A manufacturing method of lime-improved soil mortar used in the fluidizing process in the civil engineering/construction work comprising the following two steps:
1^{st} step: preparing slurry by mixing water and a hydraulic solidifying material; and
2^{nd} step: mixing and stirring said slurry prepared in said 1^{st} step and said lime-improved soil to manufactured lime-improved soil mortar.

3. A fluidizing process comprising, in a civil engineering/construction work for executing filling, back-filling, grouting and construction of embankment by using fluidizing lime-improved soil, the steps of preparing lime-improved soil mortar by the method according to claim 2 as said fluidized lime-improved soil, and executing the work by using the thus prepared lime-improved soil mortar.

4. A fluidizing process according to claim 3, wherein said lime-improved soil mortar is prepared at the site of said civil engineering/construction work.

5. A fluidizing process according to claim 3, wherein the mixing ratio of said slurry to said lime-improved soil in said 2^{nd} step is determined on the basis of a viscosity value required for the lime-improved soil mortar used at the execution site.

## Patentansprüche

1. Durch Kalk verbesserter Bodenmörtel zur Verwendung für das Verflüssigungsverfahren bei Tiefbau/Hochbauarbeiten, **dadurch gekennzeichnet, dass** er durch die im Folgenden angegebene erste und zweite Stufe hergestellt wird:
1. Stufe: Herstellen einer Aufschlämmung durch Mischen von Wasser und einem hydraulisch erstarrenden Material; und
2. Stufe: Mischen und Rühren der in der 1. Stufe hergestellten Aufschlämmung und der durch Kalk verbesserten Erde zur Herstellung von durch Kalk verbessertem Bodenmörtel.

2. Verfahren zur Herstellung von durch Kalk verbessertem Bodenmörtel zur Verwendung in dem Fluidisierungsverfahren bei Tiefbau/Hochbauarbeiten, wobei das Verfahren die im Folgenden angegebenen zwei Stufen umfasst:
1. Stufe: Herstellen einer Aufschlämmung durch Mischen von Wasser und einem hydraulisch erstarrenden Material; und
2. Stufe: Mischen und Rühren der in der 1. Stufe hergestellten Aufschlämmung und der durch Kalk verbesserten Erde zur Herstellung von durch Kalk verbessertem Bodenmörtel.

3. Fluidisierungsverfahren, das bei Tiefbau/Hochbauarbeiten zur Durchführung von Füllen, Hinterfüllen, Einpressen und Dammbau unter Verwendung von fließfähiger, durch Kalk verbesserter Erde die Stufen der Herstellung von durch Kalk verbessertem Bodenmörtel durch das Verfahren gemäß Anspruch 2 als die fließfähige, durch Kalk verbesserte Erde und der Durchführung der Arbeiten unter Verwendung des auf diese Weise hergestellten, durch Kalk verbesserten Bodenmörtels umfasst.

4. Fluidisierungsverfahren nach Anspruch 3, wobei der durch Kalk verbesserte Bodenmörtel am Ort der Tiefbau/Hochbauarbeiten hergestellt wird.

5. Fluidisierungsverfahren nach Anspruch 3, wobei das Mischungsverhältnis der Aufschlämmung zur durch Kalk verbesserten Erde in der zweiten Stufe auf der Basis des Viskositätswerts, der für den am Durchführungsort verwendeten, durch Kalk verbesserten Bodenmörtel erforderlich ist, bestimmt wird.

## Revendications

1. Mortier à base de sol enrichi en chaux utilisé pour le procédé de liquéfaction dans le cadre d'un travail d'ingénierie civile/de construction, **caractérisé en ce qu'**il est fabriqué par les première et deuxième étapes suivantes :
1ère étape : préparation d'une barbotine en mélangeant de l'eau et un matériau solidifiant hydraulique ; et
2ème étape : mélange et agitation de ladite barbotine préparée dans ladite 1ère étape et dudit sol enrichi en chaux pour fabriquer le mortier à base de sol enrichi en chaux.

2. Procédé de fabrication d'un mortier à base de sol enrichi en chaux utilisé dans le procédé de fluidification dans le cadre d'un travail d'ingénierie civile/de construction, comprenant les deux étapes suivantes :
1ère étape : préparation d'une barbotine en mélangeant de l'eau et un matériau solidifiant hydraulique ; et
2ème étape : mélange et agitation de ladite barbotine préparée dans ladite 1ère étape et dudit sol enrichi en chaux pour fabriquer le mortier à base de sol enrichi en chaux.

3. Procédé de fluidification comprenant, dans le cadre d'un travail d'ingénierie civile/de construction pour effectuer le remplissage, le remblayage, l'injection et la construction de talus en utilisant un sol fluidifiant enrichi en chaux, les étapes de préparation d'un mortier à base de sol enrichi en chaux à l'aide du procédé selon la revendication 2 en tant que sol fluidifié enrichi en chaux, et la réalisation du travail en utilisant le mortier à base de sol enrichi en chaux préparé.

4. Procédé de fluidification selon la revendication 3, dans lequel ledit mortier à base de sol enrichi en chaux est préparé sur le site dudit travail d'ingénierie civile/de construction.

5. Procédé de fluidification selon la revendication 3, dans lequel le rapport de mélange de ladite barbotine audit sol enrichi en chaux dans ladite 2ème étape est déterminé en fonction d'une valeur de viscosité requise pour le mortier à base de sol enrichi en chaux utilisé sur le site de réalisation.
